# EUROPEAN PATENT APPLICATION

(11) **EP 3 213 618 A1**
(43) Date of publication of application: **06.09.2017**
(21) Application number: 15856030.0
(22) Date of filing: 13.07.2015
(51) Int. Cl.: A01D 34/00, A01D 75/00

(54) **INVERSELY POSITIONABLE MOWER STRUCTURE**

(30) Priority: 27.10.2014 CN 201420622110 U
(71) Applicant: Changzhou Globe Co., Ltd., Jiangsu 213023 (CN)
(72) Inventor: JIAO, Wanchun, Changzhou Jiangsu 213023 (CN)
(74) Representative: Becker Kurig Straus
(86) International application number: PCT/CN2015/083834
(87) International publication number: WO 2016/065929

(57) **Abstract**

An upright placeable lawn mower structure includes a casing; a wheel assembly; a rear panel; a front panel; and height adjustment stands. The rear panel is secured to the casing. The height adjustment stands include left and right height adjustment stands provided on left and right sides of the casing. The wheel assembly is provided on an outer side of the casing. The wheel assembly includes front wheels, rear wheels, a wheel axle provided between the front wheels, and a further wheel axle provided between the rear wheels. The structure is simple. It is easy to place the lawn mower, and can reduce occupied space. The push rod of the lawn mower is easy to fold.

## Description

### FIELD OF THE TECHNOLOGY

The present application relates to the field of lawn mower, and in particular to an upright placeable lawn mower structure.

### BACKGROUND

A lawn mower, also known as weeder, grass cutter, lawn trimmer, is a mechanical tool for lawn pruning, and vegetation, etc. Current lawn mowers have the following deficiencies: 1) the machine can only be placed horizontally, cannot be placed upright, and occupy a relatively large home storage space; and 2) it is laborious to fold the lawn mower push rod, easy to scratch the surface of the lawn mower, and affect its appearance.

### SUMMARY

The technical problem to be solved is to provide an upright placeable lawn mower structure. The structure is simple. It is easy to place the lawn mower upright, and can reduce occupied space. The push rod of the lawn mower can be folded easily.

To solve the above-mentioned technical problem, a technical solution is to provide an upright placeable lawn mower structure including a casing; a wheel assembly; a rear panel; a front panel; and height adjustment stands, the rear panel being secured to the casing, the height adjustment stands including a left height adjustment stand and a right height adjustment stand, the left height adjustment stand being provided on a left side of the casing, the right height adjustment stand being provided on a right side of the casing, the wheel assembly being provided on an outer side of the casing, the wheel assembly including front wheels, rear wheels, a wheel axle provided between the front wheels, and a further wheel axle provided between the rear wheels.

In a preferred embodiment, a supporting foot is provided at a top end of each of the left and right height adjustment stands.

In a preferred embodiment, each supporting foot is provided with a protective rubber sleeve.

In a preferred embodiment, auxiliary grooves are provided on an end face of the front panel.

In a preferred embodiment, a push rod is mounted on the casing through a support frame, the push rod being fixedly connected to the support frame by means of a quick-release pin and a screw.

The beneficial effect of the lawn mower structure of the present application is that the lawn mower structure is simple. It can reduce polluting particles produced in rubber production process, and at the same time filter box is stable and safe. It has the functions of anti-static and corrosion resistance, and has long service life.

### BRIEF DESCRIPTION OF THE DRAWINGS

In order to more clearly illustrate the technical solution provided by the embodiments of the lawn mower structure of the present application, the drawings to be used in the description of the embodiments will be briefly described below. It will be apparent that the drawings mentioned in the following description are merely some implementations of the lawn mower structure. Without making any creative effort, a person skilled in the art may derive other drawings from the drawings in the present application, wherein:

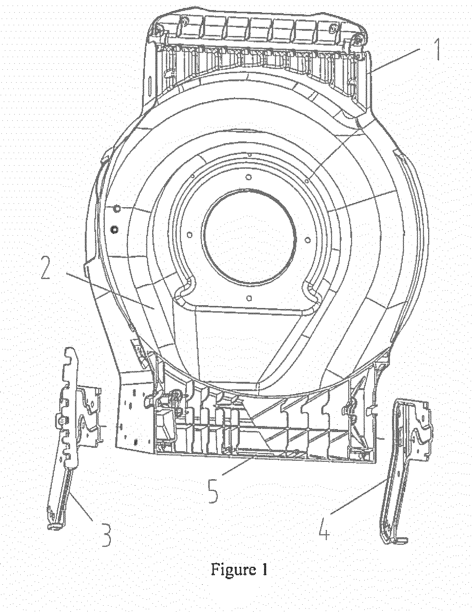

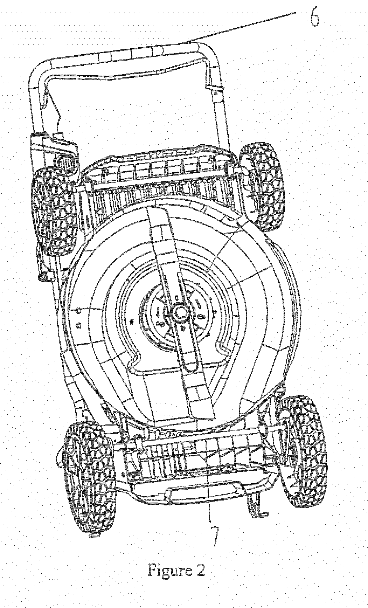

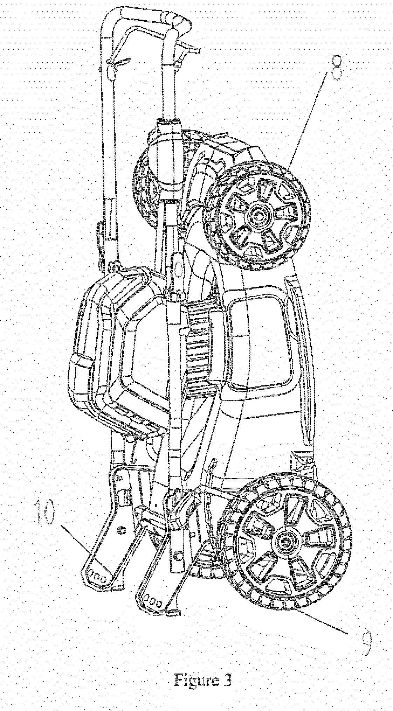

Figures 1, 2 and 3 are schematic views from different angles of a preferred embodiment of an upright placeable lawn mower structure of the present application.

The reference numerals in the drawings and their designating parts are as follows: 1 - front panel, 2 - casing, 3 - right height adjustment stand, 4, left height adjustment stand, 5 - rear panel, 6 - push rod, 7 - wheel axles, 8 - front wheels, 9 - rear wheels, 10 - supporting feet.

### DETAILED DESCRIPTION

The technical solution provided by the embodiments of the lawn mower structure of the present application will be described clearly and completely below. It is apparent that the described embodiments are only some embodiments of the lawn mower structure, and not all of the embodiments. All other embodiments obtained by an ordinary technical person skilled in the art, without making any creative effort, are within the scope of protection of the lawn mower structure of the present application.

An embodiment of the upright placeable lawn mower structure may include a casing 2, a wheel assembly 7, 8, 9, a rear panel 5, a front panel 1, and height adjustment stands 3, 4.

In addition, the rear panel 5 may be secured to the casing 2. The height adjustment stands 3, 4 may include a left height adjustment stand 4 and a right height adjustment stand 3. The left height adjustment stand 4 may be provided on a left side of the casing 2, and the right height adjustment stand 3 may be provided on a right side of the casing 2. The structure is compact and occupies little space. A supporting foot 10 may be provided at a top end of each of the left and right height adjustment stands 3, 4. Each supporting foot 10 may be provided with a protective rubber sleeve. The rubber sleeves can serve the purpose of protecting the floor.

The wheel assembly may be provided on an outer side of the casing 2. The wheel assembly may include front wheels 8, rear wheels 9, a wheel axle 7 provided between the front wheels 8, and a further wheel axle 7 provided between the rear wheels 9.

In addition, auxiliary grooves may be provided on an end face of the front panel 1 to facilitate insertion of a finger when the lawn mower machine is placed in an upright position

In addition, a push rod 6 may be mounted on the casing 2 through a support frame. The push rod 6 may be fixedly connected to the support frame by means of a quick-release pin and a screw. The push rod 6 can be directly folded and positioned without the need of tightening or loosening a nut, and its angle can be adjustable.

The upright placeable lawn mower structure of the present application is an optimization based on existing lawn mowers. The lawn mower of the present application can be placed at will. It only occupies little space, and its push rod is easy to use.

The above-mentioned embodiments are merely some embodiments of the lawn mower structure of the present application, and the scope of patent protection is not limited to these embodiments. Any equivalent structures or equivalent changes of process using the contents of the present patent specification, or any direct/indirect application in other related field of technology are within the scope of patent protection of the present application.

## Claims

1. An upright placeable lawn mower structure, comprising a casing; a wheel assembly; a rear panel; a front panel; and height adjustment stands, the rear panel being secured to the casing, the height adjustment stands comprising a left height adjustment stand and a right height adjustment stand, the left height adjustment stand being provided on a left side of the casing, the right height adjustment stand being provided on a right side of the casing, the wheel assembly being provided on an outer side of the casing, the wheel assembly comprising front wheels, rear wheels, a wheel axle provided between the front wheels, and a further wheel axle provided between the rear wheels.

2. The upright placeable lawn mower structure according to claim 1, wherein a supporting foot is provided at a top end of each of the left and right height adjustment stands.

3. The upright placeable lawn mower structure according to claim 2, wherein each supporting foot is provided with a protective rubber sleeve.

4. The upright placeable lawn mower structure according to claim 1, wherein auxiliary grooves are provided on an end face of the front panel.

5. The upright placeable lawn mower structure according to claim 1, wherein a push rod is mounted on the casing through a support frame, the push rod being fixedly connected to the support frame by means of a quick-release pin and a screw.
